# EUROPÄISCHE PATENTSCHRIFT

(11) **EP 3 635 286 B1**
(45) Veröffentlichungstag und Bekanntmachung des Hinweises auf die Patenterteilung: **15.11.2023**
(21) Anmeldenummer: 18728009.4
(22) Anmeldetag: 13.04.2018
(51) Int. Cl.: F16L 33/22

(54) **SCHLAUCHANORDNUNG**
HOSE ASSEMBLY
ENSEMBLE DE TUYAU FLEXIBLE

(30) Priorität: 08.05.2017 DE 102017004353
(43) Veröffentlichungstag der Anmeldung: 15.04.2020
(73) Patentinhaber: Xenios AG, 74076 Heilbronn (DE)
(72) Erfinder: SCHOMBURG, Chris, 74076 Heilbronn (DE); BEURER, Matthias, 70499 Stuttgart (DE)
(74) Vertreter: Graf von Stosch, Andreas
(86) Internationale Anmeldenummer: PCT/DE2018/000103
(87) Internationale Veröffentlichungsnummer: WO 2018/206023

(56) Entgegenhaltungen:
- EP-A1- 0 833 092
- WO-A1-2008/041224
- DE-U1-202005 006 580
- US-A- 4 736 969
- US-A1- 2014 353 965

## Beschreibung

Die Erfindung betrifft eine Anordnung aus einem Schlauch, einem Konnektor und einem Fixierring, der auf den Schlauch so aufgeschoben ist, dass seine Außenseite frei zugänglich ist und eine Innenseite am Schlauch anliegt.

Fixierringe für Schläuche wie insbesondere Gartenschläuche, sind als GARDENA-Konnektor bekannt. Dabei wird der Schlauch über eine Schlauchtülle geschoben und an der Schlauchtülle sind Greifarme, die über einen Anpressring von außen an den Schlauch angepresst werden. Der Anpressring hat ein Innengewinde, das mit einem Außengewinde der Tülle zusammenwirkt und bei einer Relativverschiebung zwischen dem Anpressring und der Tülle werden ein Haltearme über eine schiefe Ebene an die Außenseite des Schlauchs gepresst, um den Schlauch sicher zwischen dem Haltearm und der Schlauchtülle zu halten.

Diese zweiteilige Anordnung ist aufwendig in der Herstellung und stellt nur eine unsichere Verbindung zwischen Schlauch und Tülle her.

Im medizinischen Bereich werden daher Schlauchhülsen verwendet, die durch einen Hülsenring an den Schlauch angepresst werden. Ein derartiges System ist als BarbLock^{®} bekannt. Außerdem ist es bekannt, Schläuche auf einen strukturierten Konnektor aufzuschieben und mittels eines Kabelbinders am Konnektor zu halten.

Die EP 0 833 092 A1 offenbart eine Schlauchverbindung bestehend aus einem Anschlussstutzen zum Aufschieben eines Schlauchendes unter Aufweitung des Schlauchinnendurchmessers und einem mit einem Innengewinde versehenen Schraubstück zum Festklemmen des Schlauchendes. Die WO 2008/041224 A1 bezieht sich auf eine Kupplung mit einem Stutzen und einem Ring zur Verbindung mit einem Ende eines Schlauchs, wobei der Stutzen einen Widerhaken aufweist und das Ende des Schlauchs zwischen dem Widerhaken und einem sich nach vorne verjüngenden Kragen der Bohrung des Rings eingepresst wird. Die US 2014/353965 A1 beschreibt eine Schlauchverbindung mit einem sich verjüngenden Stutzen der in ein Schlauchende eingesetzt wird und einem äußeren Zylinderkörper mit Innengewinde, das eine Spiralnut auf einer Umfangsfläche des Schlauchs schraubt, in die der Stutzen unter plastischer Verformung des Schlauchs eingeführt wird. Die US 4,736,969 A offenbart eine Schlauch und Kupplung umfassende Anordnung, wobei die Kupplung ein in den Schlauch hineinragendes Anschlussstück mit ringförmigen Rippen und ein den Schlauch umgebendes und an das Anschlussstück anpressendes Spannglied umfasst, wobei der Schlauch zwischen den als Zähnen ausgebildeten Rippen des Anschlussstücks und Zähnen an der Innenseite des als Hülse ausgebildeten Spannglieds eingequetscht ist und den Raum zwischen Anschlussstück und Hülse vollständig ausfüllt und dadurch das Austreten von Öl zwischen Anschlussstück und Hülse verhindert.

Nachteilhaft an derartigen Verbindungen ist, dass die Gefahr besteht, dass die Verbindung im medizinischen Bereich nach einer Sterilisation oder Alterung des Schlauches nicht mehr hält und Undichtigkeiten auftreten.

Der Erfindung liegt daher die Aufgabe zu Grunde, eine derartige Anordnung umfassend einen Schlauch und einen Fixierring weiterzuentwickeln.

Die der Erfindung zugrunde liegende Aufgabe wird mit einer Anordnung gemäß Anspruch 1 aus einem Schlauch, einem Konnektor und einem Fixierring gelöst, bei der die Außenseite des Schlauches aus einem weicheren Material hergestellt ist als das Innengewinde des Fixierringes, der Schlauch eine gewindelose Oberfläche aufweist und der Fixierring auf den Schlauch auf geschraubt ist.

Das zylinderförmige Innengewinde des Fixierringes erlaubt es, den auf dem Konnektor aufgesteckten Schlauch an den Konnektor anzupressen und durch das Einpressen des Gewindes in die Außenseite des Schlauches den Schlauch zumindest auf einem Teilstück des Konnektors gegen den Konnektor zu pressen. Die Halterung mit dem kleineren Innendurchmesser hält den Schlauch außerhalb des Gewindebereichs.

Vorteilhaft ist es, wenn ein derartiger Fixierring einteilig ist.

Um den Konnektor auf einfache Art und Weise relativ zu einem Schlauch zu drehen, wird vorgeschlagen, dass er an seiner Außenseite ein Antriebsprofil aufweist.

Dieses Antriebsprofil kann zwei parallele Anschlagflächen für einen Maulschlüssel aufweisen oder es weist Flügel zum Anschrauben per Hand auf.

Der Fixierring kann auf einfache Art und Weise aus Kunststoff hergestellt sein. Der einfache Aufbau ermöglicht es, den Fixierring auch als Kunststoffspritzgussteil herzustellen. Hierbei kann auch ein Zweikomponentenmaterial verwendet werden, bei dem insbesondere das Gewinde aus einem härteren Material hergestellt ist, als andere Bereiche des Fixierrings. Der Fixierring kann jedoch auch aus Metall oder anderen Materialien und Verbundstoffen hergestellt sein.

Die Halterung des Fixierrings weist ein sich konisch verjüngendes Ende auf. Dabei kann der Innendurchmesser des Innengewindes größer als der Außendurchmesser des Schlauches sein, während das sich konisch verjüngende Ende zumindest in einem Bereich etwa dem Außendurchmesser des Schlauches entspricht oder sogar einen geringeren Außendurchmesser aufweist. Dieses Ende kann auch elastisch ausgebildet sein, um eine Anlage des Endes an der Außenseite des Schlauches zu gewährleisten.

Im sich konisch verjüngenden Ende ist eine umlaufende Erhebung angeordnet. Diese Erhebung kann eine Rampe und/oder einen Dom aufweisen, der fest an der Außenseite des Schlauches anliegt.

Um ein Aufstecken des Fixierringes auf den Schlauch zu erleichtern oder ein Herausziehen des Schlauches aus dem Fixierring zu erschweren, kann die Erhebung in der Erstreckungsrichtung des Schlauches einseitig eine Rampe aufweisen.

Je nach Ausführungsform kann die Rampe zum Gewinde hin radial nach außen abfallen oder radial nach innen ansteigen und es können auch mehrere Rampen vorgesehen sein, die radial nach außen abfallen oder radial nach innen ansteigen. Dabei kann durch eine gleichmäßige Umschließung und Druckverteilung eine zusätzliche Abdichtung erzielt werden. Die Erhebung kann auch eine abgerundete innere Kante aufweisen, um mit ihr das Material des Schlauches nicht zu beschädigen.

Weiterhin wird optional vorgeschlagen, dass der Fixierring mindestens einen elastischen Haken aufweist. Vorzugsweise sind am Umfang des Fixierringes mehrere Haken angeordnet. Sofern der Konnektor eine Hinterschneidung aufweist, können diese Haken beim Aufschrauben des Fixierringes auf einen auf die Tülle des Konnektors aufgeschobenen Schlauch am Konnektor entlanggleiten, bis sie hinter der Hinterschneidung einrasten. Dadurch wird dem Anwender mechanisch, optisch und gegebenenfalls sogar akustisch mitgeteilt, wann der Fixierring weit genug auf den Schlauch auf geschraubt ist.

Außerdem kann der Fixierring eine Skala aufweisen, um dem Benutzer zu zeigen, wie weit der Fixierring auf den Schlauch und den Konnektor auf geschraubt ist.

Die Anordnung zeigt die Funktion des Fixierringes, der, nachdem der Schlauch aus weicherem Material auf die Tülle des Konnektors aufgesteckt ist, zum Konnektor hin geschraubt werden kann, während das Innengewinde ein Außengewinde in das weiche Schlauchmaterial drückt und dabei den Schlauch gegen die Tülle des Konnektors presst.

Vorteilhaft ist es, wenn der Schlauch ein PVC-Schlauch ist.

Je nach der Ausbildung des Gewindes und der Festigkeit des Schlauches kann das Gewinde des auf geschraubten Fixierringes an den Schlauch nur angedrückt sein oder das Gewinde ist in den Schlauch eingeschnitten. Abgerundete Gewindegänge schonen den Schlauch während sich spitze Gewindegänge in den Schlauch einschneiden können. Ein Anpressen des Fixierringes an den Schlauch mit abgerundeten Gewindegängen sorgt für eine feste Presspassung und ein Einschneiden erhöht die Stabilität gegen ein Herausziehen des Schlauches aus dem Fixierring. Je nach Anwendungsfall kann somit ein Gewinde mit spitzen Gewindegängen oder mit abgerundeten Gewindegängen vorgesehen werden und es können auch spitze und abgerundete Gewindegänge kombiniert werden.

Beispielsweise kann die maximale Einschneidtiefe im Bereich zwischen 0,1 mm und 3 mm liegen. Die Schlauchgrößen können beispielsweise bei 3/8 oder 1/4 Zoll liegen und die Wandstärke wird an das Schlauchmaterial, die Einschneidtiefe oder den Anpressdruck angepasst.

Im Schlauch ist ein Konnektor und vorzugsweise eine Schlauchtülle eines Konnektors angeordnet , um beim Aufschrauben des Konnektors die Innenseite des Schlauches zu stützen und/oder den Schlauch nach außen zu dehnen.

Vorteilhaft ist es, wenn der Konnektor eine umlaufende Rampe aufweist, um ein Aufschieben des Schlauches auf den Konnektor und eine Dehnung des Innendurchmessers des Schlauches zu ermöglichen.

Der Konnektor und der Fixierring können rastend zusammenwirken, um den Fixierring am Konnektor zu halten.

Weiterbildend wird vorgeschlagen, dass die Anordnung einen Zeiger und eine Skala aufweist, die derart angeordnet sind, dass beim Aufschieben des Fixierringes auf den Konnektor der Zeiger relativ zur Skala verschoben wird. Dabei kann der Fixierring die Skala aufweisen, während der Zeiger an einem Konnektor angeordnet ist oder der Konnektor weist die Skala auf und der Fixierring den Zeiger.

Eine vorteilhafte Verwendung sieht vor, dass eine Schraube mit mindestens teilweise konischem Innengewinde als Fixierung zur Befestigung eines Schlauches an einem Konnektor eingesetzt wird. Dabei kann das Innengewinde bei der Befestigung in den Schlauch eingeschnitten werden oder nur fest am Schlauch anliegen.

Vorteilhafte Ausführungsvarianten sind Gegenstand der Zeichnung und werden im Folgenden näher erläutert. Es zeigt
- Figur 1: eine dreidimensionale Darstellung eines Konnektors,
- Figur 2: einen Schnitt durch den in Figur 1 gezeigten Konnektor,
- Figur 3: einen vergrößerten Ausschnitt aus Figur 2,
- Figur 4: das Zusammenwirken des Fixierringes mit einem Schlauch,
- Figur 5: das Anpressen des Schlauches mit dem Fixierring an die Tülle eines Konnektors,
- Figur 6: die Rückseite des in Figur 1 gezeigten Fixierringes,
- Figur 7: eine Draufsicht auf den in Figur 1 gezeigten Fixierring,
- Figur 8: die Vorderseite des in Figur 1 gezeigten Fixierringes,
- Figur 9: eine Seitenansicht des in Figur 1 gezeigten Fixierringes,
- Figur 10: den Ausschnitt B aus Figur 3,
- Figur 11: den Ausschnitt C aus Figur 3,
- Figur 12: eine alternative Ausführungsform mit einem Sechskantgewinde an der Außenseite des Fixierringes,
- Figur 13: einen Fixierring mit Flügeln als Antriebsprofil,
- Figur 14: eine alternative Ausführungsvariante eines Fixierringes mit zwei entgegengesetzten Rampen,
- Figur 15: schematisch die Anordnung der Rampen,
- Figur 16: einen Schnitt durch den in Figur 14 gezeigten Fixierring auf einem Schlauch im Bereich eines Konnektors,

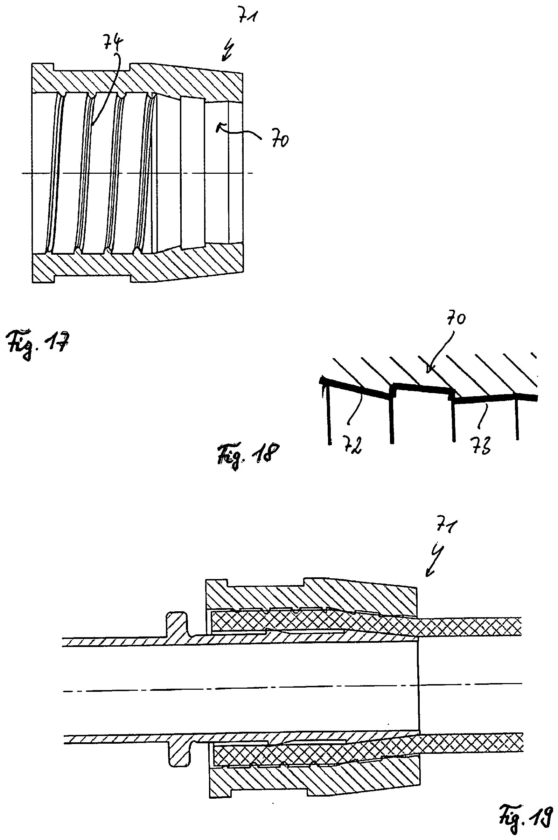

- Figur 17: einen Schnitt durch eine alternative Ausführungsform eines Fixierringes mit doppelter Rampe,
- Figur 18: schematisch die Anordnung der Rampen,
- Figur 19: einen Schnitt durch den in Figur 17 gezeigten Fixierring auf einem Schlauch im Bereich des Konnektors,
- Figur 20: einen Schnitt durch eine alternative Ausführungsform eines Fixierringes mit einfacher Rampe,
- Figur 21: schematisch den Aufbau der Rampe,
- Figur 22: einen Schnitt durch den in Figur 20 gezeigten Fixierring auf einem Schlauch im Bereich eines Konnektors,
- Figur 23: eine perspektivische Ansicht eines Fixierringes mit elastischen Haken,
- Figur 24: einen Schnitt durch den in Figur 23 gezeigten Fixierring,
- Figur 25: eine perspektivische Ansicht eines Fixierringes mit einer Skala und
- Figur 26: einen Schnitt durch den in Figur 25 gezeigten Fixierring.

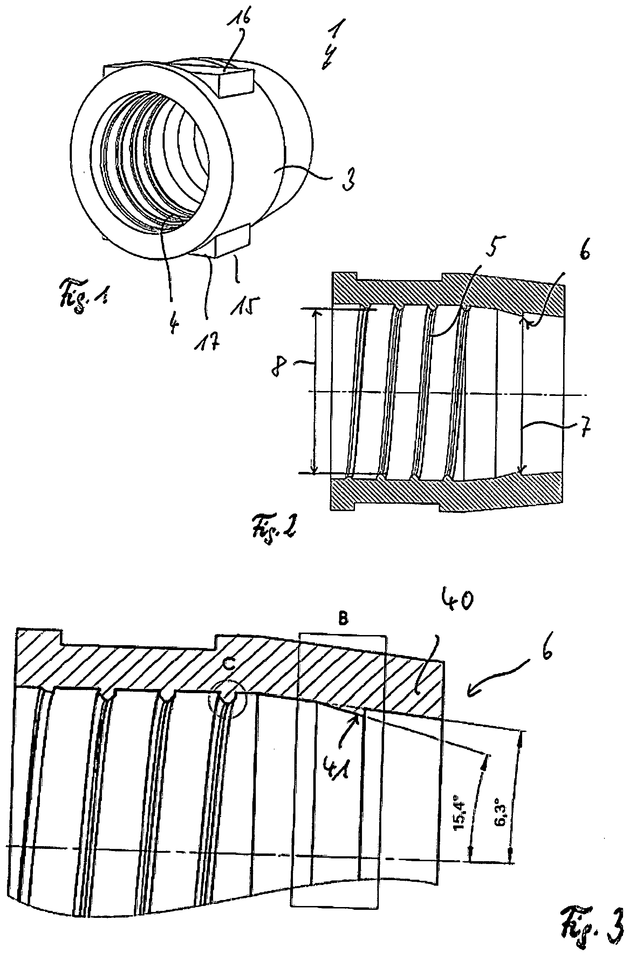

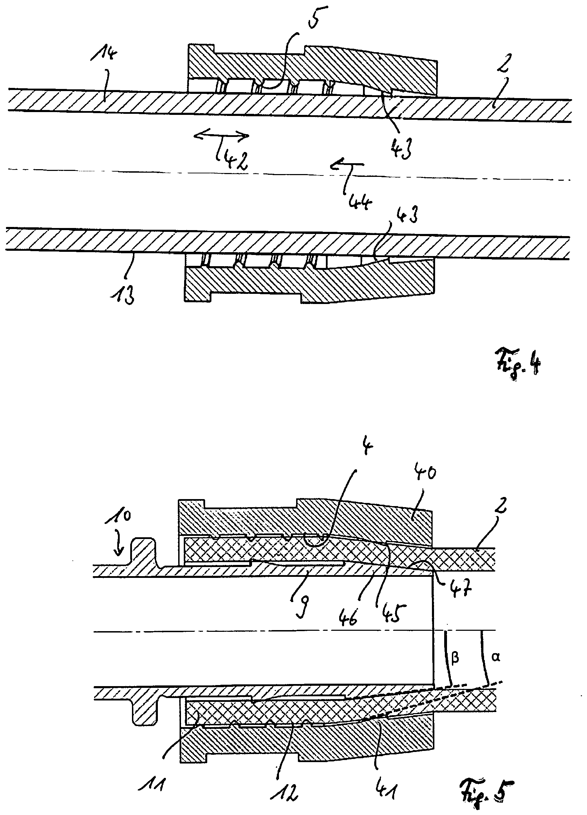

Der in Figur 1 gezeigte Fixierring 1 kann auf einen in den Figuren 4 und 5 gezeigten Schlauch 2 auf geschoben werden. Dabei ist seine Außenseite 3 frei zugänglich, während eine Innenseite 4 des Fixierringes 1 am Schlauch 2 anliegt. Diese Innenseite 4 hat ein zylinderförmiges Innengewinde 5. Außerdem hat der Fixierring eine Halterung 6 mit einem kleineren Innendurchmesser 7 als dem Innendurchmesser 8 des Innengewindes 5.

Dieser Fixierring ist einteilig ausgebildet und kann zunächst wie in Figur 4 gezeigt auf einen Schlauch 2 aufgeschoben werden und dann wie in Figur 5 gezeigt, nachdem der Schlauch auf eine Tülle 9 eines Konnektors 10 aufgeschoben wurde, am Schlauchende 11 durch Drehen auf den Schlauch auf geschraubt werden. Dabei presst sich das Gewinde 5 in die Außenseite 12 des Schlauches 2, der eine gewindelose Oberfläche 13 aufweist und aus einem weicheren Material 14 hergestellt ist als das Innengewinde 5 des Fixierringes 1.

Das Innengewinde 5 ist zylinderförmig dargestellt.

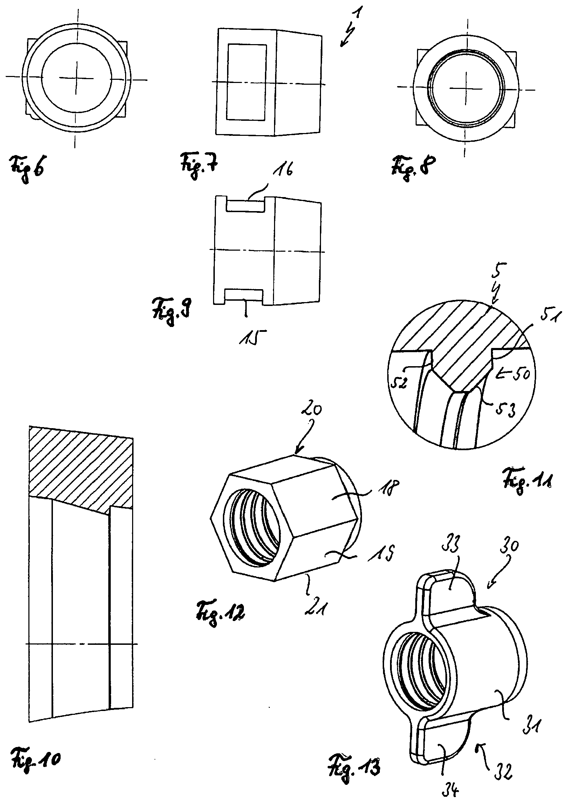

Als Antriebsprofil 15 sind bei dem in den Figuren 1 bis 11 gezeigten Ausführungsbeispiel zwei Anlageflächen 16, 17 für einen Maulschlüssel (nicht gezeigt) ausgebildet. In dem in Figur 12 gezeigten Ausführungsbeispiel sind darüber hinaus zwei weitere Anlageflächen 18, 19 vorgesehen, sodass dieser Fixierring 20 ein Sechskantprofil an seiner Außenseite aufweist.

Der in Figur 13 gezeigte Fixierring 30 weist an seiner Außenseite 31 ein Antriebsprofil 32 mit zwei Flügeln 33 und 34 zum Anschrauben per Hand auf.

Der Fixierring 1 hat als Halterung 6 ein sich konisch verjüngendes Ende 40 mit einer umlaufenden Erhebung 41. Diese Erhebung 41 weist in der Erstreckungsrichtung 42 des Schlauches 2 einseitig eine Rampe 43 auf, die in Richtung 44 zum Gewinde 5 hin radial nach außen ansteigt.

Das sich konisch verjüngende Ende 40 presst somit die umlaufende Kante 45 am radial inneren Ende der Rampe 43 in den Schlauch 2, um diesen gegen das konische Ende 46 der Tülle 9 des Konnektors 10 zu pressen. Im Ausführungsbeispiel hat das konische Ende 46 der Tülle eine umlaufende schräge Fläche 47, die in einem Winkel β schräg zur Erstreckung 42 des Schlauches 2 angeordnet ist. Die Rampe 43 der Erhebung 41 ist in einem Winkel α schräg zur Erstreckung 42 des Schlauches 2 angeordnet. Da der Winkel β kleiner ist als der Winkel α presst die Rampe 43 den Schlauch 2 gegen die umlaufende konische Fläche 47 der Tülle und dringt dabei in die Außenseite 12 des Schlauches 2 etwas ein, um den Schlauch zu halten.

Die Figur 11 zeigt die Gewindeform des Gewindes 5 in vergrößerter Darstellung. Dabei sind die Gewindegänge 50 beabstandet angeordnet. Sie haben zwei parallele Flanken 51, 52 und eine trapezförmige Innenfläche 53. Dieses Spezialgewinde hält den Schlauch 2 und presst ihn gegen die Tülle 9 des Konnektors 10, ohne den Schlauch unnötig zu belasten.

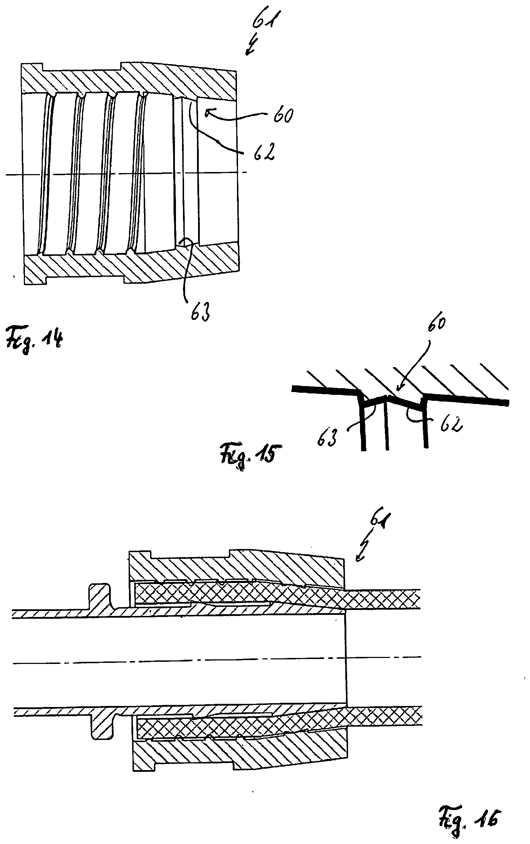

Eine alternative Ausführungsform einer Halterung 60 ist in Figur 14 an dem Fixierring 61 gezeigt. Diese Halterung 60 hat eine erste Rampe 62, die wie die Rampe 43 zum Gewinde 5 hin radial nach außen abfällt und eine zweite Rampe 63, die zum Gewinde 5 hin radial nach innen ansteigt. Dabei verhindert insbesondere die zweite Rampe 63 ein Herausziehen des Schlauches aus dem Fixierring 61.

Eine Halterung 70 an einem Fixierring 71 zeigt beabstandet zueinander angeordnet eine zum Gewinde 74 hin radial nach außen abfallende Rampe 72 und eine zum Gewinde 74 weiter beabstandet angeordnete Rampe 73, die zum Gewinde 74 hin radial nach innen ansteigt.

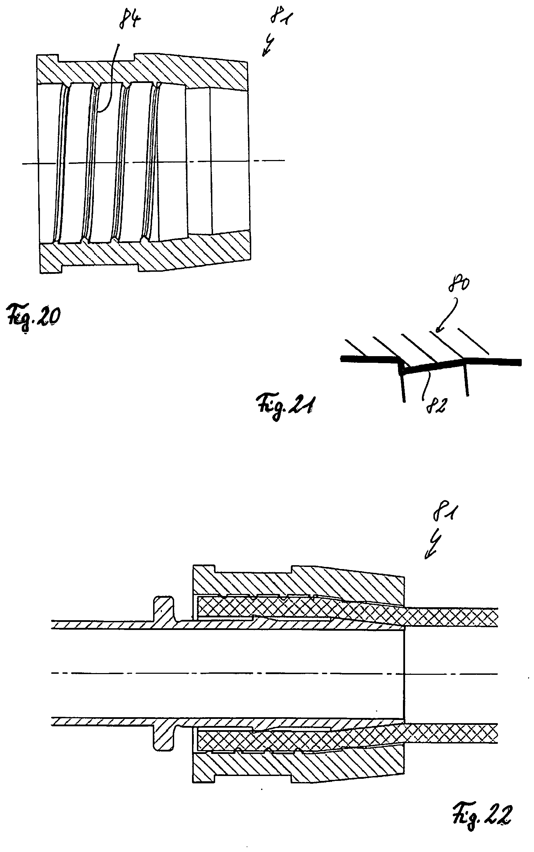

Schließlich zeigen die Figuren 20 bis 22 eine Halterung 80 an einem Fixierring 81 mit einer Rampe 82, die zum Gewinde 84 hin radial nach innen ansteigt.

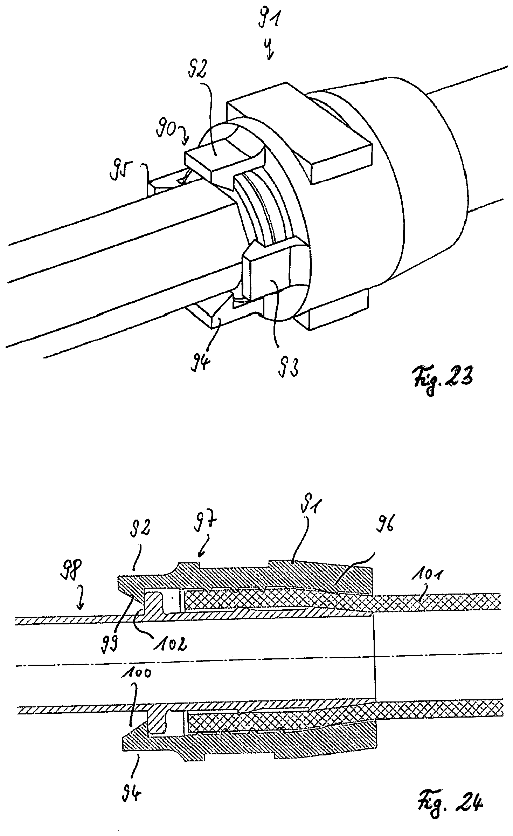

Die Figuren 23 und 24 zeigen eine Rasteinrichtung 90 an einem Fixierring 91, die vier Rasthaken 92, 93, 94 und 95 aufweist. Diese Rasthaken sind an dem der Halterung 96 gegenüber liegenden Ende 97 des Fixierringes 91 vorgesehen und sie wirken als Teil des Fixierrings 91 rastend mit dem Konnektor 98 zusammen. Dafür weisen die Haken 92 bis 95 eine schiefe Ebene 99, 100 (nur exemplarisch beziffert) auf, die beim Aufschrauben des Fixierringes 91 auf den Schlauch 101 die Haken 92 bis 95 radial auseinander drückt. Sowie die Haken 92 bis 95 in den Bereich der Anlagefläche 102 des Konnektors 98 geraten, springen sie rastend radial nach innen, um den Fixierring 91 am Konnektor 98 zu halten.

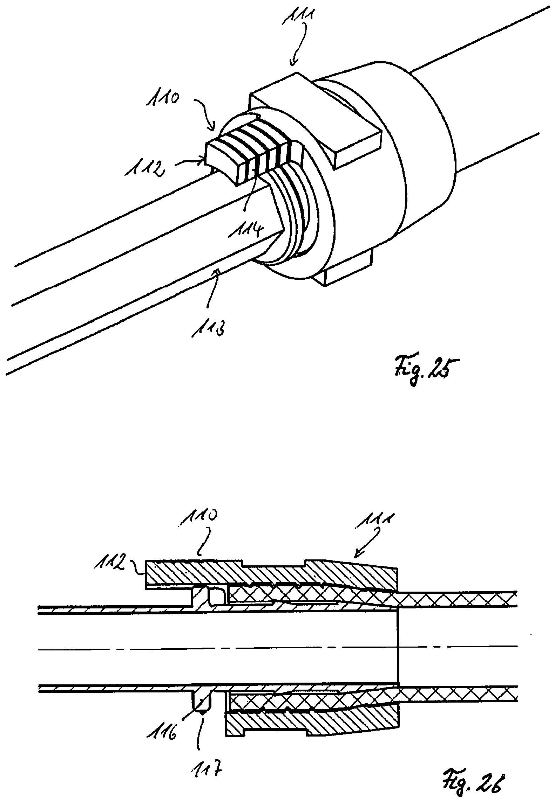

Die Figuren 25 und 26 zeigen eine Skala 110 an einem Konnektor 113. Hierzu wurde in einem Teilbereich 112 der Fixierring 111 zum Konnektor 113 hin verlängert, um über Markierungen 114 die relative Position des Fixierrings 111 relativ zum Konnektor 113 ablesen zu können. Die Markierungen 114 können auch als Nuten ausgebildet sein. Der Anschlag 102 oder der umlaufende vorstehende Ring 116 dienen dabei als Zeiger 117 an der Skala 110.

## Patentansprüche

1. Anordnung aus einem Schlauch (2), einem Konnektor (10), der im Schlauch (2) angeordnet ist, und einem Fixierring (1), der so auf den Schlauch (2) aufgeschoben ist, dass seine Außenseite (3) frei zugänglich ist und eine Innenseite (4) des Fixierrings (1) am Schlauch (2) anliegt, wobei die Innenseite (4) ein zylinderförmiges Innengewinde (5) und der Fixierring (1) eine Halterung (6) mit einem kleineren Innendurchmesser (7) als dem Innendurchmesser (8) des Innengewindes (5) aufweist, wobei der Fixierring (1) als Halterung (6) außerhalb des Gewindebereichs einen Bereich als sich konisch verjüngendes Ende (40) aufweist und in diesem Bereich eine umlaufende Erhebung (41) angeordnet ist, wobei das Innengewinde (5) des Fixierrings (1) derart ausgebildet ist, dass der auf den Konnektor (10) aufgesteckte Schlauch (2) an den Konnektor (10) angepresst wird, wobei durch das Einpressen des Innengewindes (5) in die Außenseite des Schlauches (2) der Schlauch (2) zumindest auf einem Teilstück des Konnektors (10) gegen den Konnektor (10) gepresst wird;
wobei die Außenseite (12) des Schlauches (2) aus einem weicheren Material (14) hergestellt ist als das Innengewinde (5) des Fixierringes (1), der Schlauch (2) eine gewindelose Oberfläche (13) aufweist und der Fixierring (1) auf den Schlauch (2) aufgeschraubt ist.

2. Anordnung nach Anspruch 1, ***dadurch gekennzeichnet, dass*** der Fixierring (1) einteilig ist.

3. Anordnung nach einem der vorhergehenden Ansprüche, ***dadurch gekennzeichnet, dass*** der Fixierring (1) an seiner Außenseite (3) ein Antriebsprofil (15) aufweist.

4. Anordnung nach Anspruch 3, ***dadurch gekennzeichnet, dass*** das Antriebsprofil (15) zwei parallele Anschlagflächen (16, 17) für einen Maulschlüssel aufweist.

5. Anordnung nach Anspruch 3, ***dadurch gekennzeichnet, dass*** das Antriebsprofil (32) Flügel (33, 34) zum Anschrauben per Hand aufweist.

6. Anordnung nach einem der vorhergehenden Ansprüche, ***dadurch gekennzeichnet, dass** der* Fixierring (1) aus einem Kunststoff hergestellt ist.

7. Anordnung nach einem der vorhergehenden Ansprüche, ***dadurch gekennzeichnet, dass*** die Erhebung (41) in der Erstreckungsrichtung (42) des Schlauches (2) einseitig eine Rampe (43) aufweist.

8. Anordnung nach Anspruch 7, ***dadurch gekennzeichnet, dass*** die Rampe (43) zum Gewinde (5) hin radial nach außen abfällt.

9. Anordnung nach Anspruch 7, ***dadurch gekennzeichnet, dass*** die Rampe (63) zum Gewinde (5) hin radial nach innen ansteigt.

10. Anordnung nach einem der vorhergehenden Ansprüche, ***dadurch gekennzeichnet, dass** der* Fixierring (1) mindestens einen elastischen Haken (92 bis 95) aufweist.

11. Anordnung nach einem der vorhergehenden Ansprüche, ***dadurch gekennzeichnet, dass*** der Fixierring (1) eine Skala (110) aufweist.

12. Anordnung nach einem der vorhergehenden Ansprüche, ***dadurch gekennzeichnet, dass*** der Schlauch (2) ein PVC-Schlauch ist.

13. Anordnung nach einem der vorhergehenden Ansprüche, ***dadurch gekennzeichnet, dass*** das Gewinde in den Schlauch zumindest teilweise eingeschnitten ist.

14. Anordnung nach einem der vorhergehenden Ansprüche, ***dadurch gekennzeichnet, dass*** das Gewinde zumindest bereichsweise in den Schlauch nicht eingeschnitten sondern nur an den Schlauch angepresst ist.

15. Anordnung nach einem der vorhergehenden Ansprüche, ***dadurch gekennzeichnet, dass*** der Konnektor (10) mindestens eine umlaufende Rampe (46) aufweist.

16. Anordnung nach einem der vorhergehenden Ansprüche, ***dadurch gekennzeichnet, dass*** der Konnektor (10) und der Fixierring (91) rastend zusammenwirken.

17. Anordnung nach einem der vorhergehenden Ansprüche, ***dadurch gekennzeichnet, dass*** ein Zeiger (117) und eine Skala (110) derart an ihr angeordnet sind, dass beim Aufschieben des Fixierringes (111) auf den Konnektor (113) der Zeiger (117) relativ zur Skala (110) verschoben wird.

## Claims

1. An arrangement consisting of a tube (2), a connector (10) disposed within the tube (2), and a fixing ring (1) which is be pushed onto the tube (2) in such a way that its outer side (3) is freely accessible and an inner side (4) of the fixing ring (1) rests against the tube (2), the inner side (4) having a cylindrical internal thread (5) and the fixing ring (1) having a holder (6) with a smaller internal diameter (7) than the internal diameter (8) of the internal thread (5), the fixing ring (1) having, as a holder (6) outside the threaded region, a region as a conically tapering end (40), and a circumferential projection (41) being arranged in this region, wherein the internal thread (5) of the fixing ring (1) is designed in such a way that it allows the tube (2), which is pushed onto the connector (10), to be pressed against the connector (10), wherein, by the internal thread (5) being pressed into the outside of the tube (2), the tube (2) is pressed against the connector (10), at least on a section of the connector (10);
wherein the outer side (12) of the tube (2) is made of a softer material (14) than the internal thread (5) of the fixing ring (1), the tube (2) has a threadless surface (13), and the fixing ring (1) is screwed onto the tube (2).

2. The arrangement according to claim 1, ***characterised in that*** the fixing ring (1) is in one piece.

3. The arrangement according to any one of the preceding claims, ***characterised in that*** the fixing ring (1) has a drive profile (15) on its outer side (3).

4. The arrangement according to claim 3, ***characterised in that*** the drive profile (15) has two parallel stop surfaces (16, 17) for a spanner.

5. The arrangement according to claim 3, ***characterised in that*** the drive profile (32) has wings (33, 34) for screwing on by hand.

6. The arrangement according to any one of the preceding claims, ***characterised in that*** the fixing ring (1) is made of a plastic.

7. The arrangement according to any one of the preceding claims, ***characterised in that*** the projection (41) has a ramp (43) on one side in the direction of extension (42) of the tube (2).

8. The arrangement according to claim 7, ***characterised in that*** the ramp (43) slopes radially outwards towards the thread (5).

9. The arrangement according to claim 7, ***characterised in that*** the ramp (63) rises radially inwards towards the thread (5).

10. The arrangement according to any one of the preceding claims, ***characterised in that*** the fixing ring (1) comprises at least one elastic hook (92 to 95).

11. The arrangement according to any one of the preceding claims, ***characterised in that*** the fixing ring (1) has a scale (110).

12. The arrangement according to any one of the preceding claims, ***characterised in that*** the tube (2) is a PVC tube.

13. The arrangement according to any one of the preceding claims, ***characterised in that*** the thread is at least partially cut into the tube.

14. The arrangement according to any one of the preceding claims, ***characterised in that**,* at least in certain areas, the thread is not cut into the tube but is only pressed against the tube.

15. The arrangement according to any one of the preceding claims, ***characterised in that*** the connector (10) comprises at least one circumferential ramp (46).

16. The arrangement according to any one of the preceding claims, ***characterised in that*** the connector (10) and the fixing ring (91) cooperate in a locking manner.

17. The arrangement according to any one of the preceding claims, **characterised in *that*** a pointer (117) and a scale (110) are arranged thereon such that when the fixing ring (111) is pushed onto the connector (113), the pointer (117) is displaced relative to the scale (110).

## Revendications

1. Agencement d'un tuyau (2), d'un raccord (10), lequel est disposé dans le tuyau (2), et d'une bague de fixation (1), laquelle est enfilée sur le tuyau (2) de façon à ce que sa face externe (3) soit librement accessible et qu'une face interne (4) de la bague de fixation (1) repose sur le tuyau (2), dans lequel la face interne (4) présente un filetage interne cylindrique (5) et la bague de fixation (1) présente un élément de retenue (6) avec un diamètre interne (7) plus petit que le diamètre interne (8) du filetage interne (5), dans lequel la bague de fixation (1) présente en tant qu'élément de retenue (6), en dehors de la zone filetée, une zone sous forme d'extrémité (40) s'effilant en forme de cône, et dans cette zone est disposée une surélévation périphérique (41), dans lequel le filetage interne (5) de la bague de fixation (1) est conçu de telle sorte que le tuyau (2) emmanché sur le raccord (10) soit pressé contre le raccord (10), dans lequel grâce à l'enfoncement du filetage interne (5) dans la face externe du tuyau (2), le tuyau (2) est plaqué contre le raccord (10) au moins sur un tronçon du raccord (10) ;
dans lequel la face externe (12) du tuyau (2) est fabriquée à partir d'un matériau (14) plus souple que le filetage interne (5) de la bague de fixation (1), le tuyau (2) présente une surface non filetée (13) et la bague de fixation (1) est vissée sur le tuyau (2).

2. Agencement selon la revendication 1, **caractérisé en ce que** la bague de fixation (1) est en une seule pièce.

3. Agencement selon l'une des revendications précédentes, **caractérisé en ce que** la bague de fixation (1) présente sur sa face externe (3) un profilé d'entraînement (15).

4. Agencement selon la revendication 3, **caractérisé en ce que** le profilé d'entraînement (15) présente deux surfaces de butée (16, 17) parallèles pour une clé plate.

5. Agencement selon la revendication 3, **caractérisé en ce que** le profilé d'entraînement (32) présente des ailettes (33, 34) pour le vissage à la main.

6. Agencement selon l'une des revendications précédentes, **caractérisé en ce que** la bague de fixation (1) est fabriquée à partir d'une matière plastique.

7. Agencement selon l'une des revendications précédentes, **caractérisé en ce que** la surélévation (41) présente, sur une seule face, une rampe (43) dans la direction d'extension (42) du tuyau (2).

8. Agencement selon la revendication 7, **caractérisé en ce que** la rampe (43) descend radialement vers l'extérieur jusqu'au filetage (5).

9. Agencement selon la revendication 7, **caractérisé en ce que** la rampe (63) monte radialement vers l'intérieur jusqu'au filetage (5).

10. Agencement selon l'une des revendications précédentes, **caractérisé en ce que** la bague de fixation (1) présente au moins un crochet élastique (92 à 95).

11. Agencement selon l'une des revendications précédentes, **caractérisé en ce que** la bague de fixation (1) présente une graduation (110).

12. Agencement selon l'une des revendications précédentes, **caractérisé en ce que** le tuyau (2) est un tuyau en PVC.

13. Agencement selon l'une des revendications précédentes, **caractérisé en ce que** le filetage est au moins en partie entaillé dans le tuyau.

14. Agencement selon l'une des revendications précédentes, **caractérisé en ce que** le filetage, au moins dans certaines zones, n'est pas entaillé dans le tuyau, mais uniquement pressé contre le tuyau.

15. Agencement selon l'une des revendications précédentes, **caractérisé en ce que** le raccord (10) présente au moins une rampe périphérique (46).

16. Agencement selon l'une des revendications précédentes, **caractérisé en ce que** le raccord (10) et la bague de fixation (91) coopèrent par encliquetage.

17. Agencement selon l'une des revendications précédentes, **caractérisé en ce qu'**un curseur (117) et une graduation (110) sont disposés sur celui-ci de telle sorte que lors de l'enfilement de la bague de fixation (111) sur le raccord (113), le curseur (117) est déplacé par rapport à la graduation (110).
